# EUROPÄISCHE PATENTSCHRIFT

(11) **EP 4 466 169 B1**
(45) Veröffentlichungstag und Bekanntmachung des Hinweises auf die Patenterteilung: **27.05.2026**
(21) Anmeldenummer: 22844202.6
(22) Anmeldetag: 27.12.2022
(51) Int. Cl.: B60T 17/00

(54) **SCHALLDÄMPFEREINHEIT FÜR EIN NUTZFAHRZEUG**
SILENCER UNIT FOR A COMMERCIAL VEHICLE
GROUPE SILENCIEUX POUR VEHICULE UTILITAIRE

(30) Priorität: 17.01.2022 DE 102022101010
(43) Veröffentlichungstag der Anmeldung: 27.11.2024
(73) Patentinhaber: KNORR-BREMSE Systeme für Nutzfahrzeuge GmbH, 80809 München (DE)
(72) Erfinder: SCHNITTGER, Karsten, 80935 München (DE); MUNOZ LOU, Victor, Javier, 80993 München (DE)
(86) Internationale Anmeldenummer: PCT/EP2022/087875
(87) Internationale Veröffentlichungsnummer: WO 2023/135013

(56) Entgegenhaltungen:
- EP-B1- 1 136 337
- EP-B1- 2 303 659
- DE-A1- 2 932 777

## Beschreibung

Die vorliegende Erfindung betrifft einen Spritzschutzdeckel für eine Schalldämpfereinheit für ein Nutzfahrzeug.

Nutzfahrzeuge besitzen in der Regel pneumatischen Bremssysteme. Die Elemente dieser Bremssysteme sind dabei auch regelmäßig mit Druckluftablässen versehen, über die Druckluft aus dem System in die Atmosphäre ablassen werden kann.

Dieser Abströmkanal ist in der Regel vertikal nach unten ausgerichtet ist. Bei der Montage des Gerätes im Fahrzeug wird dann oft eine Toleranz von +/-30° von der Mittelachse des Gerätes zur Hochachse akzeptiert, so dass dann der Ablasskanal auch diese Lage haben kann.

Um das auftretende Entlüftungsgeräusch in der Lautstärke zu mindern werden in der Regel Schalldämpfer eingesetzt.

Die Mittelachse des Schalldämpfers ist dabei parallel zu der Achse des Abströmkanals des Gerätes.

Der Schalldämpfer weist ein Medium zur Geräuschminderung auf, insbesondere ein aufgewickeltes Gestrick.

Über die Schnittstelle zu dem Gerät des LKW-Bremssystems kann Druckluft auf einer ersten Seite des Mediums zur Geräuschminderung eingeleitet werden.

Die Druckluft kann aus der gegenüberliegenden zweiten Seite oder seitlich aus dem Medium zur Geräuschminderung austreten. Die Druckluft strömt also nach unten und radial zur Seite ab.

Normalerweise ist kein Spritzschutz für den Schalldämpfer vorgesehen und die Luft kann in den Freiraum um den Schalldämpfer abströmen.

Bei einer Reinigung des Gerätes von unten mit einem Hochdruckreiniger kann Wasser von außen in gerader Linie durch das Medium zur Geräuschminderung in den Abströmkanal des Gerätes des LKW-Bremssystem gelangen. Es wird darauf vertraut das dieses Wasser dann durch die Schwerkraft wieder nach unten über den Schalldämpfer abfließt.

Feuchtigkeit oder Wasser im Schalldämpfer ist aber insbesondere bei kalten Außentemperaturen problematisch, weil sich dann der Schalldämpfer mit Eis zusetzen und einfrieren kann. Ein Abströmen von Luft durch den Schalldämpfer kann hierdurch erschwert bzw. sogar komplett unmöglich werden. Dies schränkt aber die Betriebsfähigkeit der Luftdruckaufbereitung der pneumatischen Bremsanlage des Nutzfahrzeugs ein und kann bis zum Ausfall und zur Zwangswartung der Bremsanlage führen.

Aus dem Stand der Technik sind bereits Schalldämpfereinheiten für Nutzfahrzeuge bekannt.

So offenbart die DE 10 2013 016 084 A1 einen Geräuschdämpfer für die Entlüftung einer Druckluftanlage, welche ein Steuerungsvorrichtungsgehäuse mit einem Gehäuseboden aufweist, wobei der Gehäuseboden einen an eine Hauptabluftleitung der Druckluftanlage angeschlossenen Zentralkanal und einen dazu benachbarten, an eine Steuerabluftleitung angeschlossenen Raum aufweist, und mit einem mit dem Gehäuseboden abnehmbar verbundenen Gehäusedeckel mit Auslassöffnungen. Die Abströmrichtung ist dabei vertikal nach unten Richtung Boden (bezogen auf den montierten, betriebsbereiten Zustand).

Aus der EP 2 303 659 B1 ist weiter ein Geräuschdämpfer für Druckluftsystem von Fahrzeugen bekannt, der ein Gehäuse und ein Dämmmittel aufweist, wobei das Gehäuse einen Lufteinlass und einen Luftauslass aufweist, und das Dämmmittel innerhalb des Gehäuses angeordnet ist, so dass vom Lufteinlass zum Luftauslass die Luft durch das Dämmmittel strömt und durch diese Weise eine Geräuschdämpfung erzielt wird. Die Abströmrichtung ist dabei auch hier wieder vertikal nach unten Richtung Boden (bezogen auf den montierten, betriebsbereiten Zustand).

Die EP 3 400 154 B1 offenbart einen Geräuschdämpfer für ein Druckluftsystem eines Nutzfahrzeugs mit einem Überdruckventil, das zerstörungsfrei arbeitet. Die Abströmrichtung ist dabei vertikal nach unten Richtung Boden (bezogen auf den montierten, betriebsbereiten Zustand).

Außerdem zeigt die WO 2006/010400 A1 betrifft einen Geräuschdämpfer für Drucklufteinrichtungen, der ein rohrförmiges Gehäuseteil mit einem Lufteinlass und mit eingesetztem Dämmmaterial aufweist. Das Dämmmaterial ist hier insbesondere durch eine Gestrickrolle ausgebildet. Die zugeführte Luft soll dabei tangential zum Dämmmaterial bzw. zur Gestrickrolle einströmen und dann innerhalb des Gehäuseteiles radial umgelenkt werden und axial aus einem Ende des rohrförmigen Gehäuseteils ausströmen. Das Dokument DE 29 32 777 A1 zeigt einen mehrstufigen Auslassschalldämpfer, mit Ringspalten.

Es ist daher Aufgabe der vorliegenden Erfindung, eine Schalldämpfereinheit für ein Nutzfahrzeug der eingangs genannten Art in vorteilhafter Weise weiterzubilden, insbesondere dahingehend, dass ein Eindringen von Flüssigkeiten und/oder Feuchtigkeit in die Schalldämpfereinheit verhindert bzw. signifikant vermindert werden kann.

Diese Aufgabe wird erfindungsgemäß gelöst durch einen Spritzschutzdeckel für ein Nutzfahrzeug mit den Merkmalen des Anspruchs 1. Danach ist vorgesehen, dass ein Spritzschutzdeckel für eine Schalldämpfereinheit einer Druckluftanlage eines Nutzfahrzeugs bereitgestellt wird, insbesondere für eine Druckluftbremsanlage eines Nutzfahrzeugs, wobei der Spritzschutzdeckel pagodenartig angeordnete Wandungen aufweist und wobei zwischen den Wandungen jeweils Auslassöffnungen vorgesehen sind.

Bei der Druckluftanlage handelt es sich insbesondere um eine pneumatische Aufbereitungsanlage eines Nutzfahrzeugs, insbesondere um eine Druckluftbremsanlage eines Nutzfahrzeugs.

Die Erfindung basiert auf dem Grundgedanken, dass mit einem Spritzschutzdeckel am Luftauslass einer Schalldämpfereinheit das Eindringen von Flüssigkeit in die Schalldämpfereinheit verringert bzw. verhindert wird. Insbesondere ist dabei vorgesehen, dass die Abströmung aus der Schalldämpfereinheit horizontal erfolgt und daher der Spritzschutzdeckel derart beschaffen und angeordnet ist, dass er ein Eindringen von Flüssigkeit in eine horizontal orientierte Abströmöffnung einer Schalldämpferöffnung (horizontale Orientierung zu verstehen auf die Normallage im montierten Zustand, wenn das Nutzfahrzeug auf horizontaler Ebene steht). Dann ergibt sich, dass die abströmende Luft durch den und aus der Schalldämpfereinheit nicht vertikal (bezogen auf den montierten, betriebsbereiten Zustand) in Richtung Boden abgeleitet werden soll. Außerdem soll durch den Spritzschutzdeckel erreicht werden, dass kein bzw. wenig Wasser in die Schalldämpfereinheit eindringen kann. Die pagodenartig angeordneten Wandungen des Spritzschutzdeckels bilden demnach einen pagodenartigen Aufbau und sind derart zu verstehen, dass diese eine in axialer Richtung übereinander liegende Anordnung von, insbesondere kreisrunden, Deckelabschnitten ausbilden. Die Deckelabschnitte selbst sind jeweils als runde, insbesondere kreisrunde, Plattenelemente ausgebildet. Der Deckelabschnitt, der im montierten Zustand in axialer Richtung einem Gehäuse der Schalldämpfereinheit am nächsten angeordnet ist (Bodendeckelabschnitt), weist den größten Durchmesser auf. Auf diesem Bodendeckelabschnitt sind im montierten Zustand weitere, dazu konzentrisch oder exzentrisch ausgerichtete, Deckelabschnitte in gestufter Anordnung angeordnet (Stufendeckelabschnitte). Der Durchmesser jedes Stufendeckelabschnittes verringert sich mit steigendem axialen Abstand bezogen auf den Bodendeckelabschnitt. Alternativ sind jedoch auch andere Gestaltungen denkbar, wie je ein gleicher Durchmesser, steigender Durchmesser bzw. konvexe oder konkave Durchmesserstufungen (jeweils bezogen auf einen steigenden axialen Abstand bezogen auf den Bodendeckelabschnitt). Sowohl der Bodendeckelabschnitt als auch die Stufendeckelabschnitte weißen innere axiale Aussparungen auf (durch die das Fluid axial hindurchströmen kann). Ein Durchmesser einer inneren axialen Aussparung eines größeren Deckelabschnittes ist jedoch jeweils kleiner als ein Außendurchmesser eines nächstkleineren Deckelabschnittes. Den Abschluss des pagodenartigen Aufbaus bildet derjenige Deckelabschnitt, der von dem Bodendeckelabschnitt am weitesten axial entfernt ist, wobei dieser Deckelabschnitt keine innere axiale Aussparung aufweist, so dass dieser nicht axial durchströmbar ist. Die als Stufen ausbildbaren Wandungen zwischen den einzelnen Deckelabschnitten weisen ferner, insbesondere radiale, Auslassöffnungen auf, durch welche das Fluid (als Teilstrom) radial ausströmen kann. Der zuvor beschriebene Aufbau hilft hier, durch die mehreren pagodenartigen Deckelabschnitte (z.B. zwei, drei, vier, fünf oder sechs Abschnitte) den Eintritt von hochspritzendem Schmutz und/oder Flüssigkeit, die in Richtung des Spritzschutzdeckels spritzt, abzuhalten. In der pagodenartigen Struktur können jeweils eine oder mehrere Auslassöffnungen zwischen den Wandungen angeordnet sein, die durch Teile der pagodenartigen Struktur zumindest teilweise verdeckt sind und die ein Abströmen von aus der Schalldämpfereinheit abströmender Luft einfacherer ermöglichen. Der pagodenartige Aufbau des Spritzschutzdeckels kann einstückig ausgebildet sein, was eine Vereinfachung der Montage bedeutet. Eine mehrteilige Ausgestaltung ist jedoch auch denkbar. Die Schalldämpfereinheit besitzt eine Schnittstelle zu einem Gerät des LKW-Bremssystems. Das Gerät des LKW-Bremssystems, z.B. ein Teil der Druckluftbremsanlage, weist einen Abströmkanal auf, mit dem unter Druck stehende Luft in die Schalldämpfereinheit eingeleitet werden kann. Allerdings ist dieser Abströmkanal ist nicht wie heute üblich vertikal nach unten gerichtet, sondern hat eine andere Ausrichtung, insbesondere auch eine horizontale Ausrichtung. Über die Schnittstelle zu dem Gerät des LKW-Bremssystems kann Druckluft auf einer ersten Seite des Mediums zur Geräuschminderung eingeleitet werden. Die Druckluft kann aus der gegenüber liegenden zweiten Seite oder seitlich aus dem Medium zur Geräuschminderung austreten. Das Medium zur Geräuschminderung kann von einem eigenen Gehäuse umfasst werden oder in eine Gehäusestruktur des Gerätes des LKW-Bremssystems integriert sein. Über den Luftaustrittsbereichen des Mediums zur Geräuschminderung ist ein Spritzschutz in einem Abstand zu diesem angebracht, der das einfache Ausströmen der unter Druck stehenden Luft zulässt. Der Spritzschutz ist so ausgeführt, dass er große Abströmquerschnitte für die unter Druck stehende Luft freigibt und gleichzeitig verhindert das Wasser von Außen in gerader Linie durch das Medium zur Geräuschminderung in den Abströmkanal des Gerätes des LKW-Bremssystem gelangt. Hierdurch wird ein Eindringen von Wasser (oder auch anderen Flüssigkeiten) erschwert bzw. sogar ganz verhindert. Der Spritzschutz kann an einem den Schalldämpfer umfassenden Gehäuse befestigt sein oder von einer Oberfläche eines anderen Bauteils gebildet werden, welches sich in einem geeigneten Abstand zu den Luftaustrittsbereichen des Mediums zur Geräuschminderung befindet.

Insbesondere kann vorgesehen sein, dass der Spritzschutzdeckel fluiddurchströmbar ausgebildet ist. Insbesondere kann dabei vorgesehen sein, dass das Spritzschutzelement im montierten Zustand von dem aus der Schalldämpfereinheit ausströmenden Fluid durchströmt wird. Dadurch wird erreicht, dass sich durch das Spritzschutzelement kein erhöhter Staudruck und Widerstand aufbaut und die Abströmung durch das Spritzschutzelement fluiddynamisch günstig ausgebildet ist.

Der Spritzschutzdeckel wird als Spritzschutzelement zu verwendet.

Außerdem kann vorgesehen sein, dass der Spritzschutzdeckel eine im Wesentlichen runde Grundform aufweist. Mit einer derartigen Grundform kann einfach und zuverlässig eine gleichmäßige Abdeckung erreicht werden. Diese Form ist auch aufgrund der weiten Verbreitung runder Formen im Zusammenhang mit Schalldämpfern und den zugehörigen Luftauslässen günstig.

Des Weiteren kann vorgesehen, dass der Spritzschutzdeckel eine oder mehrere Rastnasen ausweist. Mittels der Rastnasen ist es möglich, den Spritzschutzdeckel werkzeuglos zu montieren. Insbesondere kann vorgesehen sein, dass der Spritzschutzdeckel mit den Rastnasen in Öffnungen, insbesondere in Öffnungen in eine gelochten Wandung oder eines gelochten Wandungsabschnittes eingeklipst werden kann.

Insbesondere kann vorgesehen sein, dass der Spritzschutzdeckel mehrere Ringe und wenigstens eine Endplatte aufweist, die pagodenartig angeordnet sind.

Die Anordnung der Ringe und der Endplatte kann derart sein, dass in der Draufsicht sich eine geschlossen Struktur gleichsam eines Daches ergibt. Die benachbarten Elemente können sich überdecken, wodurch der wasserabweisende Effekt verbessert wird. Durch die pagodenartige Struktur können ausreichende Abstände zwischen den benachbarten Ringe bzw. dem vorletzten Ring und der Endplatte angeordnet sein, die entsprechende Auslassöffnungen ermöglichen.

Der Spritzschutzdeckel kann aus Kunststoff gefertigt sein.

Insbesondere kann vorgesehen sein, dass das Spritzschutzelement einen gestuften Deckel mit Auslassöffnungen aufweist und/oder durch einen gestuften Deckel mit Auslassöffnungen ausgebildet ist. Durch die Abstufung können mehrere Auslassöffnungen im Deckel vorgesehen sein und zugleich durch die Stufen eine bessere Abschirmung gegen Eindringen von Wasser ermöglicht werden.

Der Deckel kann als Aufsatz für die gelochte Wandung verwendet werden. Denkbar ist beispielsweise, einen solchen Deckel dann zu verwenden, wenn der Luftauslass der Schalldämpfereinheit vergleichsweise freiliegt und nicht noch zusätzlich zum Beispiel durch andere Elemente teilweise verdeckt bzw. abgeschirmt ist. Derartige Element können beispielsweise Rahmenteile des Nutzfahrzeugs oder beispielsweise auch die Trocknerkartusche der Druckluftanlage sein.

Außerdem kann vorgesehen sein, dass das Spritzschutzelement derart beschaffen und ausgebildet ist, dass es einen ausreichend großen Abströmquerschnitt für die unter Druck stehende Luft freigibt und gleichzeitig verhindert, dass Wasser von außen in gerader Linie durch die Schalldämpfereinheit in den Abströmkanal des Gerätes des LKW-Bremssystem gelangt. Dadurch wird zum Einen erreicht, dass ein ausreichender Spritzwasserschutz bereitgestellt wird. Zugleich wird zum Anderen sichergestellt, dass die abströmende Luft aus der Schalldämpfereinheit vergleichsweise ungehindert abströmen kann.

Darüber hinaus ist denkbar, dass das Spritzschutzelement in seinem Inneren ein Medium zur Geräuschreduzierung aufweist, insbesondere wobei das Medium von dem die Schalldämpfereinheit durchströmenden Fluid durchströmt wird. Denkbar ist hier insbesondere, dass das Medium Gestrick sein kann. Der Schalldämpfer weist somit ein Medium zur Geräuschminderung, insbesondere ein aufgewickeltes Gestrick auf.

Außerdem kann vorgesehen sein, dass die gelochte Wandung unmittelbar mit dem Medium zur Geräuschreduzierung in Kontakt ist. Dadurch wird eine kompakte Bauform erreicht.

Des Weiteren betrifft die vorliegende Erfindung eine Druckluftanlage für ein Nutzfahrzeug. Danach ist vorgesehen, dass die Druckluftanlage für ein Nutzfahrzeug mit wenigstens einer Schalldämpfereinheit wie vorstehend beschrieben ausgebildet ist.

Außerdem betrifft die vorliegende Erfindung ein Nutzfahrzeug. Danach ist vorgesehen, dass das Nutzfahrzeug mit wenigstens einer Druckluftanlage wie vorstehend beschrieben oder einer Schalldämpfereinheit wie vorstehend beschrieben ausgebildet ist.

Weitere Einzelheiten und Vorteile der Erfindung sollen nun anhand eines in der Zeichnung dargestellten Ausführungsbeispiels näher erläutert werden.

Es zeigen:
- Fig. 1: eine perspektivische Ansicht auf ein Ausführungsbeispiel einer Druckluftanlage für ein Nutzfahrzeug mit Ausführungsbeispielen von Schalldämpfereinheiten;
- Fig. 2: eine Schnittdarstellung auf die Schalldämpfereinheiten gemäß Fig. 1 in der Draufsicht;
- Fig. 3: eine weitere Schnittdarstellung auf die Schalldämpfereinheiten gemäß Fig. 1 in der Draufsicht;
- Fig. 4: eine Schnittdarstellung durch die Schalldämpfereinheit für den Trailer;
- Fig. 5: eine Schnittdarstellung Schnitt durch die Schalldämpfereinheit für die Zugmaschine;
- Fig. 6: eine Draufsicht auf den Spritzschutzdeckel gemäß einem Ausführungsbeispiel der vorliegenden Erfindung; und
- Fig. 7: eine Seitenansicht auf den Spritzschutzdeckel gemäß Fig. 6.

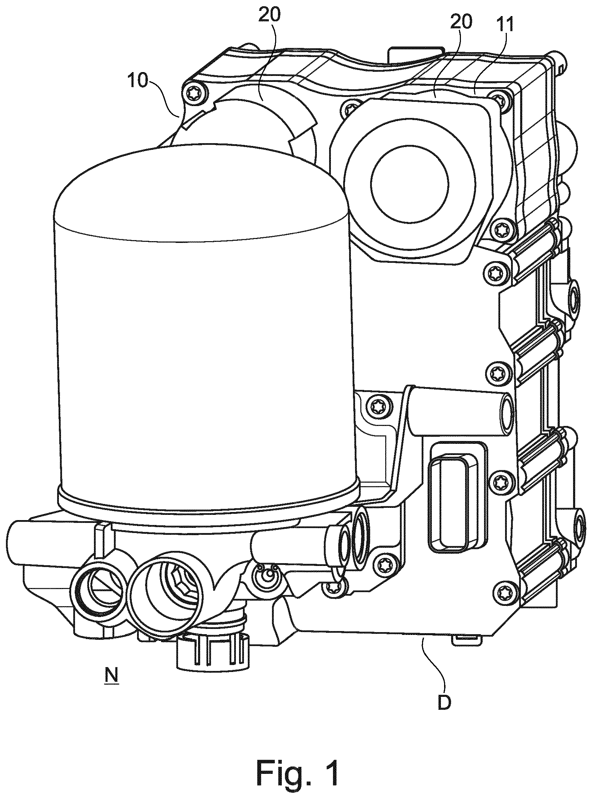

Fig. 1 zeigt eine perspektivische Ansicht auf ein Ausführungsbeispiel einer erfindungsgemäßen Druckluftanlage D für ein Nutzfahrzeug N mit zwei Ausführungsbeispielen von erfindungsgemäßen Schalldämpfereinheiten 10, 11.

Eine Schalldämpfereinheit 10 ist dabei für den Bremskreis Trailer vorgesehen und eine Schalldämpfereinheit 11 ist für den Bremskreis des Zugfahrzeugs vorgesehen.

Bei der Druckluftanlage D für das Nutzfahrzeug N handelt es sich im gezeigten Ausführungsbeispiel um die Druckluftbremsanlage bzw. eine pneumatische Bremsanlage eines Nutzfahrzeugs.

Sowohl die Schalldämpfereinheit 10 als auch die Schalldämpfereinheit 11 weisen folgende Merkmale auf.

Es existiert eine Schnittstelle 12 zur Druckluftanlage D.

Im gezeigten Ausführungsbeispiel wird die Schnittstelle 12 durch nutzfahrzeugseitige Auslassöffnungen 14 bzw. nutzfahrzeugseitige Abströmkanäle 14 der pneumatischen Bremsanlage realisiert. Die Schalldämpfereinheiten 10, 11 sind vor den Auslassöffnungen platziert und in geeigneter Weise an der Druckluftanlage D befestigt (hier mit mehreren Schrauben und einer Montageplatte).

Die Schalldämpfereinheit 10 und die Schalldämpfereinheit 11 weisen jeweils wenigstens einen Lufteinlass 16 und wenigstens einen Luftauslass 18 auf.

Sowohl bei der Schalldämpfereinheit 10 und der Schalldämpfereinheit 11 weist der Luftauslass im montierten und mit der Druckluftanlage D verbundenen Zustand der Schalldämpfereinheit 10 bzw. 11 eine Ausrichtung auf, die nicht vertikal (bezogen auf den montierten, betriebsbereiten Zustand) nach unten in Richtung Boden gerichtet ist. Vielmehr ist die Abströmrichtung parallel zum Untergrund, also auf horizontal ausgerichtetem Untergrund ist die Abströmrichtung horizontal.

Außerdem weist die Schalldämpfereinheit 10 und die Schalldämpfereinheit 11 jeweils ein Gehäuse 20 auf.

Im Gehäuse 20 ist jeweils ein Medium zur Geräuschreduzierung 22, hier ein gewickeltes Gestrick 22 angeordnet.

Das Gestrick wird im Betrieb von der Druckluft durchströmt, bevor es den Schalldämpfer verlässt.

Außerdem ist das Gestrick so im Gehäuse 20 angeordnet, dass es das Gehäuse 20 zumindest teilweise direkt berührt.

Vor jeder Schalldämpfereinheit 10 und Schalldämpfereinheit 11 ist jeweils um und am Luftauslass 18, nämlich hier unmittelbar vor dem Luftauslass an der Außenseite der Schalldämpfereinheit 10 und Schalldämpfereinheit 11 ein Spritzschutzelement 24 vorgesehen.

Das Spritzschutzelement 24 ist fluiddurchströmbar ausgebildet. Dabei ist für beide Schalldämpfereinheiten, also sowohl für die Schalldämpfereinheit 10 und Schalldämpfereinheit 11 vorgesehen, dass das Spritzschutzelement 24 im montierten Zustand von dem aus der Schalldämpfereinheit 10, 11 ausströmenden Fluid durchströmt wird.

Bei sowohl der Schalldämpfereinheit 10 als auch der Schalldämpfereinheit 11 ist das Spritzschutzelement 24 teilweise dadurch ausgebildet, dass eine gelochte Wandung 26 bzw. eine gelochte Wandung 30 vorgesehen ist.

Die gelochte Wandung 26 bzw. 30 ist dabei jeweils durch einen Gehäuseabschnitt der Schalldämpfereinheit 10 bzw. 11 ausgebildet.

Bei der Schalldämpfereinheit 10 für den Trailer ist das Gehäuse 20 im Abschnitt mit der gelochten Wandung 26 mit einer Vielzahl von Rundlöchern bzw. Bohrungen 28 versehen.

Bei der Schalldämpfereinheit 11 für das Zugfahrzeug ist das Gehäuse 20 im Abschnitt mit der gelochten Wandung 30 mit einer Vielzahl von kreissegmentartigen Öffnungen 32 versehen.

Sowohl bei der Schalldämpfereinheit 10 für den Trailer als auch bei der Schalldämpfereinheit 11 für das Zugfahrzeug sind die Abschnitte mit der gelochten Wandung 26 bzw. 30 so angeordnet, dass sie in direktem Kontakt mit dem Gestrick 22 stehen.

Vor dem Abschnitt mit der gelochten Wandung 30 der Schalldämpfereinheit 11 für das Zugfahrzeug ist weiter als Bestandteil des Spritzschutzelementes ein gestufter Deckel 34 mit Auslassöffnungen vorgesehen.

Die Auslassöffnungen des gestuften Deckels 34 sind dabei nur horizontal angeordnet (bezogen auf den montierten, betriebsbereiten Zustand, wobei das Nutzfahrzeug auf ebenem Untergrund steht).

Der Deckel 34 ist hier als Aufsatz auf die Wandaußenseite des Gehäuses 20 Schalldämpfereinheit 11 für das Zugfahrzeug ausgebildet. Er wird in die Öffnungen in der gelochten Wandung 30 eingeklipst.

Da die gelochte Wandung 26 der Schalldämpfereinheit 10 von benachbarten Elementen (hier der Trocknerkartusche) bzw. Bauteilen abgedeckt ist, ist ein Deckel hier nicht notwendig. Das Eindringen von Flüssigkeit in die Schalldämpfereinheit 10 wird somit durch gelochte Wandung 26 mit ihren vergleichsweise kleinen Löchern (insbesondere im Vergleich zur gelochten Wandung 30 der Schalldämpfereinheit 11) bereits ausreichend vermindert bzw. sogar verhindert.

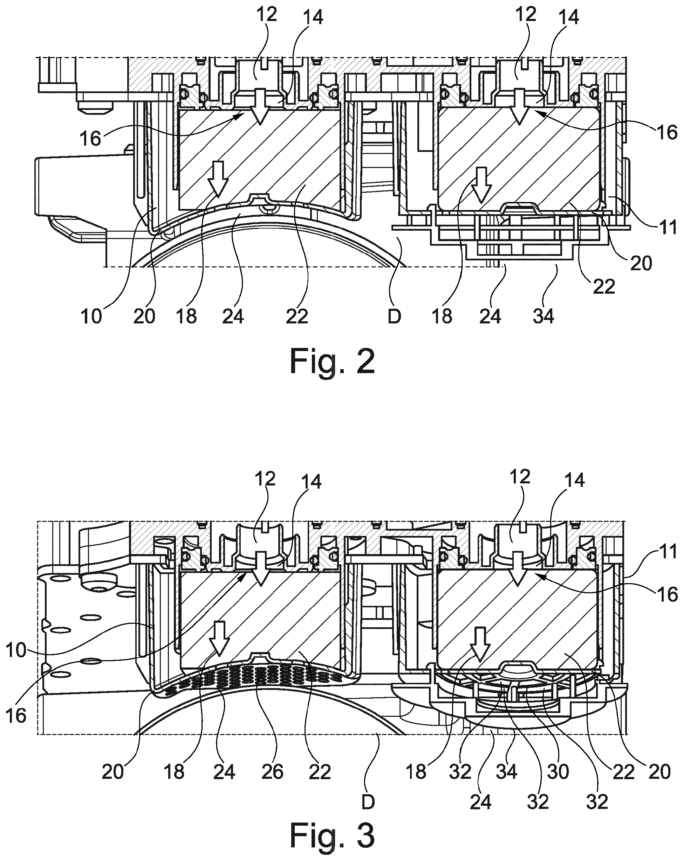

Dies ist insbesondere in den Fig. 2 bis Fig. 5 im Detail zu sehen.

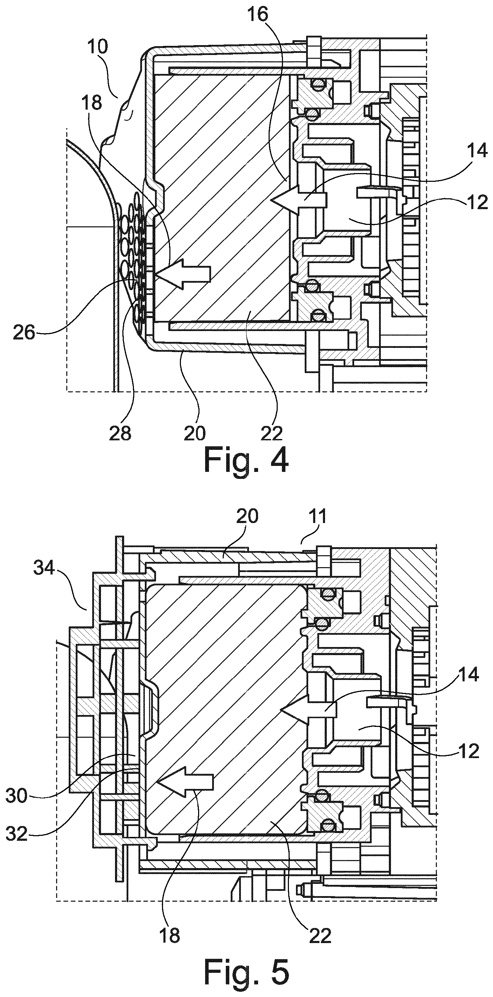

Fig. 2 zeigt eine Schnittdarstellung auf die Schalldämpfereinheiten gemäß Fig. 1 in der Draufsicht und Fig. 3 zeigt eine weitere Schnittdarstellung auf die Schalldämpfereinheiten gemäß Fig. 1 in der Draufsicht. Fig. 4 zeigt eine Schnittdarstellung durch die Schalldämpfereinheit 10 für den Trailer. Fig. 5 zeigt eine Schnittdarstellung durch die Schalldämpfereinheit 11 für die Zugmaschine.

Die Funktion der Schalldämpfereinheiten 10 und 11 lässt sich wie folgt beschreiben:
Wenn aus dem Druckluftkreis für den Trailer Druckluft zur Atmosphäre hin abgegeben werden muss, so kann dies über die Schalldämpfereinheit 10 erfolgen. Die Abströmung der Druckluft erfolgt dabei horizontal und nicht vertikal in Richtung Untergrund.

Die gilt ebenso für den Druckluftkreis für die Zugmaschine, hier wird die Druckluft über die Schalldämpfereinheit 11 abgegeben.

Beide Schalldämpfereinheiten 10 und 11 sind dabei mit den Spritzschutzelementen 24 versehen, die ein Eindringen von Wasser in die Schalldämpfereinheiten erschweren.

Aufgrund der Abdeckung durch benachbarte Elemente und Bauteile benötigt die Schalldämpfereinheit 10 weniger Spritzschutz als die Schalldämpfereinheit 11, die vergleichsweise dazu eher ungeschützt durch benachbarte Elemente und Bauteile ist. Deshalb ist hier für die Schalldämpfereinheit 11 zusätzlich noch der Deckel 34 vorgesehen.

Generell kann gesagt werden, dass die Spritzschutzelement derart beschaffen und ausgebildet sind, dass sie einen ausreichend großen Abströmquerschnitt für die unter Druck stehende Luft freigeben und gleichzeitig verhindern, dass Wasser von außen in gerader Linie durch die Schalldämpfereinheit in den Abströmkanal des Gerätes des LKW-Bremssystem gelangt. Dadurch wird zum Einen erreicht, dass ein ausreichender Spritzwasserschutz bereitgestellt wird. Zugleich wird zum Anderen sichergestellt, dass die abströmende Luft aus der Schalldämpfereinheit vergleichsweise ungehindert abströmen kann.

Gleichzeitig wird verhindert, dass Wasser von Außen in gerader Linie durch die Schalldämpfereinheit10 bzw. 11 in den Abströmkanal des Gerätes des LKW-Bremssystems gelangen kann.

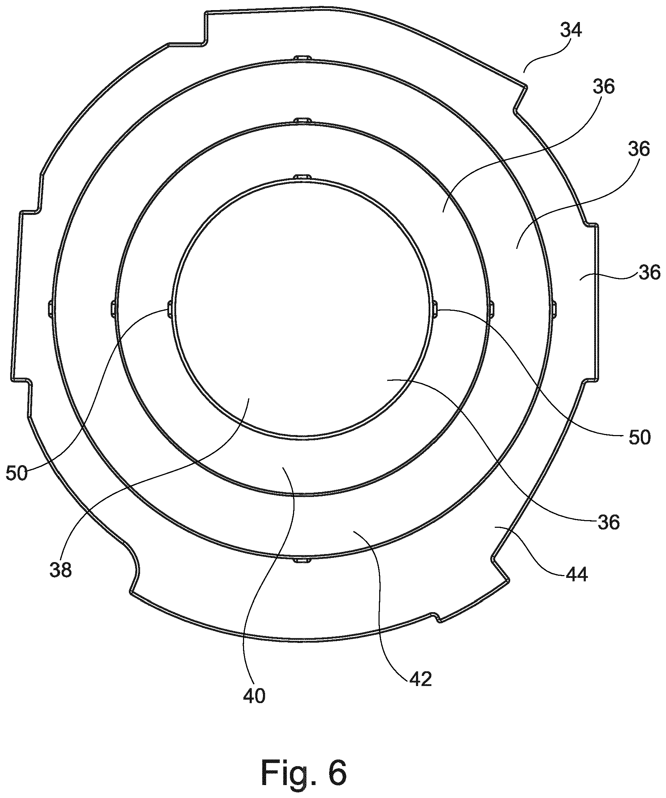

Fig. 6 eine Draufsicht auf den Spritzschutzdeckel 34 gemäß einem Ausführungsbeispiel der vorliegenden Erfindung.

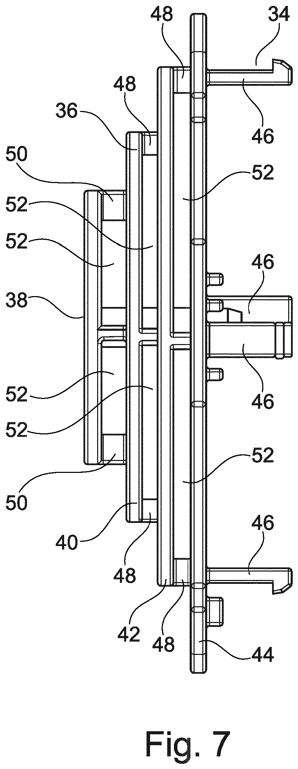

Fig. 7 eine Seitenansicht auf den Spritzschutzdeckel 34 gemäß Fig. 6.

Der Spritzschutzdeckel 34 ist der in den Fig. 1 bis Fig. 3 und Fig. 5 gezeigte gestufte Deckel 34. Der Spritzschutzdeckel 34 weist Auslassöffnungen 52 auf und ist für die Schalldämpfereinheit 11 der Druckluftanlage D des Nutzfahrzeugs N vorgesehen.

Der Spritzschutzdeckel 34 weist pagodenartig angeordnete Wandungen 36 auf und zwischen den Wandungen 36 sind jeweils Auslassöffnungen 52 vorgesehen.

Endseitig außenseitig bezogen auf den montierten Zustand weist der Spritzschutzdeckel 34 eine Endplatte 38 auf.

Die Endplatte 38 ist weiter mit einem Ring 40 verbunden und zwar über einen Verbindungssteg 50.

Der Verbindungssteg 50 ist dabei höher als die Verbindungsstege 48, so dass der Abstand von Endplatte 34 zu benachbarter Ring 40 weiter ist, als die der weiteren Ringe 42 und 44, die über die Verbindungsstege 48 verbunden sind.

Spritzschutzdeckel 34 weist weiter Rastnasen 46 auf.

Mittels der Rastnasen 46 wird der Spritzschutzdeckel 34 in der gelochten Wandung 30 verrastet und dort werkzeuglos eingeklipst.

### BEZUGSZEICHENLISTE

- 10: Schalldämpfereinheit (Trailer)
- 11: Schalldämpfereinheit (Zugfahrzeug)
- 12: Schnittstelle
- 14: Abströmkanal (nutzfahrzeugseitig)
- 16: Lufteinlass (schalldämpferseitig)
- 18: Luftauslass (schalldämpferseitig)
- 20: Gehäuse (Schalldämpfer)
- 22: Medium zur Geräuschreduzierung
- 24: Spritzschutzelement
- 26: gelochte Wandung (mit Bohrungen, Trailer)
- 28: Bohrungen gelochte Wandung
- 30: gelochte Wandung (mit kreissegmentartigen Öffnungen, Zugfahrzeug)
- 32: kreissegmentartigen Öffnungen
- 34: Deckel; Spritzschutzdeckel
- 36: Wandungen
- 38: Endplatte
- 40: Ring
- 42: Ring
- 44: Ring
- 46: Rastnase
- 48: Verbindungssteg
- 50: Verbindungssteg
- 52: Auslassöffnungen

- N: Nutzfahrzeug
- D: Druckluftanlage

## Patentansprüche

1. Spritzschutzdeckel (34) für eine Schalldämpfereinheit (11) einer Druckluftanlage (D) eines Nutzfahrzeugs (N), insbesondere eine Druckluftbremsanlage eines Nutzfahrzeugs (N), wobei der Spritzschutzdeckel (34) pagodenartig angeordnete Wandungen (36) aufweist und wobei zwischen den Wandungen (36) jeweils Auslassöffnungen (52) vorgesehen sind.

2. Spritzschutzdeckel (34) nach Anspruch 1,
**dadurch gekennzeichnet, dass**
der Spritzschutzdeckel (34) eine im Wesentlichen runde Grundform aufweist.

3. Spritzschutzdeckel (34) nach Anspruch 1 oder Anspruch 2,
**dadurch gekennzeichnet, dass**
dass der Spritzschutzdeckel (34) eine oder mehrere Rastnasen (46) ausweist.

4. Spritzschutzdeckel (34) nach einem der vorhergehenden Ansprüche,
**dadurch gekennzeichnet, dass**
der Spritzschutzdeckel (34) mehrere Ringe (40, 42, 44) und wenigstens eine Endplatte (38) aufweist, die pagodenartig angeordnet sind.

5. Spritzschutzdeckel (34) nach einem der vorhergehenden Ansprüche,
**dadurch gekennzeichnet, dass**
der Spritzschutzdeckel (34) ein gestuften Deckel (34) mit Auslassöffnungen ist.

6. Spritzschutzdeckel (34) nach einem der vorhergehenden Ansprüche,
**dadurch gekennzeichnet, dass**
der Spritzschutzdeckel (34) derart beschaffen und ausgebildet ist, dass er einen ausreichend großen Abströmquerschnitt für die unter Druck stehende Luft freigibt und gleichzeitig verhindert, dass Wasser von Außen in gerader Linie durch die Schalldämpfereinheit (11) in den Abströmkanal des Gerätes des LKW-Bremssystem gelangt.

7. Schalldämpfereinheit (11) für eine Druckluftanlage (D) eines Nutzfahrzeugs (N), insbesondere eine Druckluftbremsanlage eines Nutzfahrzeugs (N) mit wenigstens einer Schalldämpfereinheit (11), mit wenigstens einem Spritzschutzdeckel (34) nach einem der Ansprüche 1 bis 6.

8. Druckluftanlage (D) für ein Nutzfahrzeug (N) mit wenigstens einer Spritzschutzdeckel (34) nach einem der Ansprüche 1 bis 6 oder mit einer Schalldämpfer (11) nach Anspruch 7.

9. Nutzfahrzeug (N) mit einer Druckluftanlage (D) nach Anspruch 8 oder einer Schalldämpfereinheit (11) nach Anspruch 7 oder einem wenigstens einem Spritzschutzdeckel (34) nach einem der Ansprüche 1 bis 6.

## Claims

1. A splashguard cover (34) for a silencer unit (11) of a compressed-air system (D) of a commercial vehicle (N), in particular a compressed-air brake system of a commercial vehicle (N), wherein the splashguard cover (34) has walls (36) which are disposed in the manner of a pagoda, and wherein outlet openings (52) are in each case provided between the walls (36).

2. The splashguard cover (34) as claimed in claim 1, **characterized in that** the splashguard cover (34) has a substantially round basic shape.

3. The splashguard cover (34) as claimed in claim 1 or 2, **characterized in that** the splashguard cover (34) has one or a plurality of latching cams (46).

4. The splashguard cover (34) as claimed in one of the preceding claims, **characterized in that**
the splashguard cover (34) has a plurality of rings (40, 42, 44) and at least one end plate (38), which are disposed in the manner of a pagoda.

5. The splashguard cover (34) as claimed in one of the preceding claims, **characterized in that**
the splashguard cover (34) is a stepped cover (34) with outlet openings.

6. The splashguard cover (34) as claimed in one of the preceding claims, **characterized in that**
the splashguard cover (34) is specified and configured in such a manner that it releases a sufficiently large outflow cross section for the pressurized air and simultaneously prevents water from making its way from the outside in a straight line through the silencer unit (11) into the outflow duct of the apparatus of the motor truck brake system.

7. A silencer unit (11) for a compressed-air system (D) of a commercial vehicle (N), in particular a compressed-air brake system of a commercial vehicle (N), having at least one silencer unit (11) with at least one splashguard cover (34) as claimed in one of claims 1 to 6.

8. A compressed-air system (D) for a commercial vehicle (N) with at least one splashguard cover (34) as claimed in one of claims 1 to 6 or with a silencer (11) as claimed in claim 7.

9. A commercial vehicle (N) having a compressed-air system (D) as claimed in claim 8, or a silencer unit (11) as claimed in claim 7, or at least one splashguard cover (34) as claimed in one of claims 1 to 6.

## Revendications

1. Couvercle antiéclaboussures (34) pour une unité d'amortissement acoustique (11) d'un système à air comprimé (D) d'un véhicule commercial (N), en particulier un système de freinage à air comprimé d'un véhicule commercial (N), dans lequel le couvercle antiéclaboussures (34) présente des parois (36) qui sont disposées à la manière d'une pagode et dans lequel des ouvertures de sortie (52) sont prévues dans chaque cas entre les parois (36).

2. Couvercle antiéclaboussures (34) selon la revendication 1, **caractérisé en ce que**
le couvercle antiéclaboussures (34) présente une forme de base sensiblement ronde.

3. Couvercle antiéclaboussures (34) selon la revendication 1 ou 2, **caractérisé en ce que**
le couvercle antiéclaboussures (34) présente une ou une pluralité de cames de verrouillage (46).

4. Couvercle antiéclaboussures (34) selon l'une des revendications précédentes, **caractérisé en ce que**
le couvercle antiéclaboussures (34) présente une pluralité d'anneaux (40, 42, 44) et au moins une plaque d'extrémité (38) qui sont disposées à la manière d'une pagode.

5. Couvercle antiéclaboussures (34) selon l'une des revendications précédentes, **caractérisé en ce que**
le couvercle antiéclaboussures (34) est un couvercle étagé (34) avec des ouvertures de sortie.

6. Couvercle antiéclaboussures (34) selon l'une des revendications précédentes, **caractérisé en ce que**
le couvercle antiéclaboussures (34) est spécifié et configuré de manière à ce que ce dernier libère une section transversale d'écoulement suffisamment grande pour l'air pressurisé et empêche simultanément l'eau de s'écouler de l'extérieur dans une ligne droite à travers l'unité d'amortissement acoustique (11) dans le conduite d'écoulement de l'appareil du système de freinage de camion.

7. Unité d'amortissement acoustique (11) pour un système à air comprimé (D) d'un véhicule commercial (N), en particulier un système de freinage à air comprimé d'un véhicule commercial (N), présentant au moins une unité d'amortissement acoustique (11) avec au moins un couvercle antiéclaboussures (34) selon l'une des revendications 1 à 6.

8. Système à air comprimé (D) pour un véhicule commercial (N) présentant au moins un couvercle antiéclaboussures (34) selon l'une des revendications 1 à 6, ou présentant un amortisseur acoustique (11) selon la revendication 7.

9. Véhicule commercial (N) présentant un système à air comprimé (D) selon la revendication 8 ou une unité d'amortissement acoustique (11) selon la revendication 7, ou au moins un couvercle antiéclaboussures (34) selon l'une des revendications 1 à 6.
